# EUROPÄISCHE PATENTANMELDUNG

(11) **EP 4 563 404 A1**
(43) Veröffentlichungstag der Anmeldung: **04.06.2025**
(21) Anmeldenummer: 24209887.9
(22) Anmeldetag: 30.10.2024
(51) Int. Cl.: B60L 53/16, H01R 13/00, B60L 53/302

(54) **STECKVERBINDERSTECKER MIT ZIRKULARER KÜHLMEDIUMFÜHRUNG**

(30) Priorität: 09.11.2023 DE 102023131125
(71) Anmelder: Amphenol-Tuchel Electronics GmbH, 74080 Heilbronnn (DE)
(72) Erfinder: HEISIG, Nikolai, 74889 Sinsheim (DE); ANNECKE, Alfred, 74080 Heilbronn (DE)
(74) Vertreter: Staeger & Sperling Partnerschaftsgesellschaft mbB

(57) **Zusammenfassung**

Die Erfindung betrifft einen Steckverbinderstecker zur lösbaren Übertragung elektrischer Leistung, aufweisend eine Kontaktanordnung mit wenigstens einem Steckverbinderkontakt, wobei der Steckverbinderstecker ein Steckverbindersteckergehäuse aufweist, in dem die Kontaktanordnung eingehaust ist, wobei das Steckverbindersteckergehäuse den wenigstens einen Steckverbinderkontakt festlegt und wenigstens einen Kühlmediumraum für wenigstens einen Wärmetauscher bildet, wobei der wenigstens eine Kühlmediumraum wenigstens zwei zueinander beabstandete Anschlussstellen für die Zu- und Abströmung von Kühlmedium aufweist, sodass eine zirkulare Kühlmediumführung ausgebildet ist.

## Beschreibung

Die Erfindung betrifft einen Steckverbinderstecker zur lösbaren Übertragung elektrischer Leistung, aufweisend eine Kontaktanordnung mit wenigstens einem Steckverbinderkontakt, wobei der Steckverbinderstecker ein Steckverbindersteckergehäuse aufweist, in dem die Kontaktanordnung eingehaust ist.

Kontakte im Allgemeinen weisen wenigstens einen elektrisch leitfähigen Kontaktabschnitt zum lösbaren, temporären oder steckenden Verbinden mit einem korrespondierenden Gegenkontaktelement und einen an den Kontaktabschnitt anschließenden Schaftabschnitt zum Befestigen einer elektrischen Leitung an dem Kontakt auf. Ein solcher Kontakt, Steckkontakt, Hochstromkontakt kann an einem Ladestecker oder einer Ladebuchse beispielsweise zum Aufladen eines elektrisch angetriebenen Fahrzeugs Verwendung finden. In diesem Fall ist eine elektrische Leitung einerseits an eine Ladestation angeschlossen und trägt andererseits ein Steckverbinderteil in Form eines Ladesteckers, der in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen.

Ladeströme können grundsätzlich als Gleichströme oder als Wechselströme übertragen werden, wobei insbesondere Ladeströme und Hochstrombereiche in Form von Gleichstrom eine große Stromstärke, beispielsweise größer als 200 A oder sogar größer als 300 A oder gar 350 A, aufweisen und zu einer Erwärmung der elektrischen Leitung genauso wie eines mit der elektrischen Leitung verbundenen Hochstromkontaktes führen können.

Bei einem Ladevorgang von elektrischen Energiespeichern, Akkumulatoren entsteht Wärme infolge der hohen übertragenen elektrischen Leistungen, elektrischen Strömen nicht nur an der elektrischen Leitung, mit dem ein Ladestecker beispielsweise mit einer Ladestation verbunden ist, sondern auch an dem Ladestecker und insbesondere innerhalb des Ladesteckers, beispielsweise an Hochstromkontakten, über die ein elektrischer Kontakt mit zugeordneten Gegenkontakten, beispielsweise auf Seiten einer Ladebuchse, an einem Elektrofahrzeug hergestellt wird, wenn der Ladestecker in die Ladebuchse eingesteckt ist und die elektrische Leistung übertragen wird.

Solche Hochstromkontakte, die aus einem elektrisch leitfähigen Material, beispielsweise aus einem Kupferwerkstoff gefertigt sind, erwärmen sich, wenn ein Ladestrom über die Kontakte, Steckkontakte, Hochstromkontakte fließt, wobei grundsätzlich die Kontakte in Abhängigkeit von dem zu übertragenden Ladestrom so zu dimensionieren sind, dass die Kontakte eine hinreichende Stromtragfähigkeit aufweisen und eine Erwärmung an den Kontaktelementen begrenzt ist. Hierbei gilt, dass ein Kontakt umso größer zu dimensionieren ist, je größer der zu übertragende Ladestrom ist. Einer Skalierung der Kontaktelementgröße mit steigendem Ladestrom sind jedoch aufgrund des damit einhergehenden Bauraumbedarfs, des Gewichts und der Kosten Grenzen gesetzt. Es besteht daher ein Bedürfnis einen großen Ladestrom mit einem vergleichsweise klein dimensionierten Kontakt übertragen.

Im Rahmen der angestrebten Elektromobilität sind hohe Ladeströme von besonderer Bedeutung. Nur auf diese Weise lassen sich Elektrofahrzeuge beziehungsweise dessen Energiespeicher in kurzer Zeit "auftanken".

Im Stand der Technik grundsätzlich bekannte Lösungsansätze sind es, Kontakte, Hochstromkontakte passiv oder aktiv zu kühlen, um auch bei kleiner dimensionierten Bauelementen die Übertragung der elektrischen Leistung mit begrenzter Erwärmung der leistungsübertragenden Bauteile zu realisieren.

Bei passiven Kühlungskonzepten werden Kontakte beziehungsweise die Kontaktelemente in Ladesteckern, Steckkontaktgehäusen durch Konvektion gekühlt, dadurch, dass die durch die widerstandsbedingte Erwärmung und damit deren elektrische Verlustleistung durch die sie umgebende Luft gekühlt wird. Dadurch pendelt sich deren Temperatur auf eine von den Außenbedingungen abhängiges Niveau ein.

Ein anderer Weg passiver Kühlung ist, die thermische Leitfähigkeit des verwendeten Kontaktmaterials zu nutzen und die Wärme, die an der Kontaktierungsstelle durch ohmsche Verluste zum Gegenstück entsteht, in die am Kontakt angeschlossene Leitung mit vergleichsweise großer Masse und damit erhöhter Wärmeaufnahmekapazität zu leiten und so ein Temperaturgefälle zu erzeugen. Diese Wärmeableitung kann jedoch nur vergleichsweise wenig Energie aufnehmen und das thermische Gleichgewicht stellt sich ausschließlich über die verwendeten Komponenten ein. Derartige passive Kühlungskonzepte sind in ihrer Kühlleistung nur eingeschränkt steuerbar.

Bei aktiven Kühlungskonzepten erfolgt die Kühlung der Kontakte dadurch, dass ein Kühlmedium in Form von Kühlflüssigkeit von extern zugeführt und in den Ladestecker, Steckverbinder geleitet wird. Die Kühlflüssigkeit durchströmt einen innerhalb des Ladesteckers angeordneten, geschlossenen Wärmetauscher, der in mechanischem Festkörperkontakt zu den sich erwärmenden elektrischen Elementen steht. Durch das sich ergebende Temperaturgefälle und die Temperaturleitfähigkeit der Bauteile erfolgt ein Wärmeübergang auf den Wärmetauscher und weiter auf das Kühlmedium im Innern des Wärmetauschers.

Eine Lösung aus dem Bereich der aktiven Kühlung offenbart unter anderem die WO 2021/105196 A1. Verwendung findet ein Kabel beziehungsweise eine Leitung, dessen axial zentrisch angeordneter Leiter von einem Kühlmedium in einem koaxial zum Leiter angeordneten Kühlmedienraum umströmt wird. Das Kühlmedium wird an der Anschlussstelle zwischen Kabel und Ladestecker in das elektrische Kontaktelement hineingeleitet. Von dort tritt es durch in das Kontaktelement eingearbeitete Löcher ausgebildet als Durchbrüche in das Innere einer mediendichten, gemeinsamen Kontaktkammer mit einem zweiten Kontakt ein, umströmt beide Kontakte und wird dann über Bohrungen des zweiten Kontaktelementes aus der Kontaktkammer ausgeleitet. Über einen koaxialen Kühlmedienraum der zweiten Anschlussleitung wird das Kühlmedium abgeführt.

Die DE 10 2016 112 306 A1 zeigt ein aktives Kühlungskonzept eines Kontaktelementes. Das Kontaktelement weist ein Kontaktteil und ein Anschlussteil auf. Das Anschlussteil ist so ausgestaltet, dass es mit einem elektrischen Leiter einer Leitung verbindbar ist. Dem Kontaktelement ist Kühlflüssigkeit zuführbar. Im Anschlussteil des Kontaktelements sind Hohlräume vorhanden, in denen Kühlflüssigkeit strömen und dabei Wärme aufnehmen und abführen kann. Das Anschlussteil ist dazu mit einer Zuflussleitung für Kühlflüssigkeit verbindbar. Der elektrische Leiter und die Zuflussleitung können am Kontaktelement angeschlossen werden. Die Zuflussleitung ist integraler Bestandteil der elektrisch leitenden Leitung in Form eines koaxialen ringförmigen Raumes außenseitig des elektrischen Leiters. Durch diese Ausgestaltung kann der Austritt der Kühlflüssigkeit aus dem koaxialen Ringraum ausschließlich angrenzend zu dem Kontaktelement erfolgen, da die elektrische Leitung an dem Kontaktelement angeschlagen sein muss.

Eine Kühlmittelzuführlösung mit einem zentrischen Zuführkanal innerhalb der elektrischen Leitung zeigt die CN 209625887 U. Hier ist die Kühlmittelzuführung an der Anschlagstelle der elektrischen Leitung an das Kontaktelement axial fluchtend und zentrisch in einen Hohlraum des Kontaktelementes realisiert.

Bei kompakten Steckverbinderanordnungen oder reduzierten Bauräumen sind bestehende aktive Kühlkonzepte für Kontaktanordnungen innerhalb von lösbaren Steckverbindern oder Ladesteckern nicht immer geeignet, auch höhere elektrische Leistungen zu übertragen und die dadurch entstehende Verlustwärme abzuführen oder auf ein zulässiges Maß innerhalb einer elektrischen Leistungsübertragungsperiode zu begrenzen. Generell besteht bei derartigen Kühlungskonzepten der Wunsch, die Kühlleistung zu steigern, sodass die übertragbare elektrische Leistung gesteigert werden kann oder eine Bauraumreduzierung durch kleinere Dimensionierung umzusetzen. Die Lösungen im Stand der Technik sind häufig aufwändig, weisen eine Vielzahl von störanfälligen Abdichtungsstellen auf und nutzen die Wärmetransportfähigkeit des Kühlmediums nicht immer vollständig aus.

Es ist Aufgabe der Erfindung bestehende Kühlungslösungen für Kontaktanordnungen für lösbare elektrische Steckverbinder weiterzuentwickeln, sodass die zuvor genannten Nachteile des Standes der Technik wenigstens teilweise reduziert und die Kühlleistung verbessert werden.

Zur Lösung schlägt die Erfindung ein Kühlsystem für eine elektrisch leitende Kontaktanordnung in Steckverbindern, Ladesteckern vor, bei dem das Steckverbindergehäuse funktional sowohl die Einhausung der Steckverbinderkomponenten als auch die Wärmetauscherfunktion realisiert, gleichzeitig in integraler Weise die Steckverbinderkontakte mechanisch haltert sowie jeweils einen Versatz zwischen der Position der Verbindung der elektrischen Leitung einer Leitung mit dem Steckverbinderkontakt und der Position der Kühlmediumeinleitungsstelle in das Steckverbindergehäuse unterstützt.

Die Erfindung ermöglicht die Verwendung einer elektrischen Leitung, bei der das Kühlmedium (meist in Form einer Kühlflüssigkeit) in einer von mehreren Ausführungsvarianten über eine schlauchförmige Kühlmediumführung axial mittig der elektrischen Leitung geführt ist. Der elektrische Leiter der Leitung ist in einem zu der Kühlmediumführung konzentrischen Ringspaltraum angeordnet.

Unmittelbar vor der Anschlagstelle des elektrischen Leiters an den Steckverbinderkontakt ist der elektrische Leiter aus der elektrischen Leitung herausgeführt, sodass die Längserstreckung des elektrischen Leiters zu der mittigen Kühlmediumführung nicht mehr achszentrisch verläuft. Auf diese Weise kann die Kühlmittelführung beabstandet zu der Anschlagstelle am Steckverbinderkontakt an einer Anschlussstelle des Steckverbindersteckergehäuses angeschlossen werden, in dessen Inneren ein Kühlmediumraum ausgebildet und der wenigstens eine Steckverbinderkontakt der Kontaktanordnung gehaltert ist. Somit weisen Anschlagstelle und Anschlussstelle zueinander einen radialen Versatz auf, dessen Betrag durch die Positionierung der Halterung als Aufnahme des Steckverbinderkontaktes und der Anschlussstelle bestimmt ist. Alternativ kann die Kühlmediumführung auch separat von der elektrischen Leitung erfolgen, sodass ein Herausführen des elektrischen Leiters aus der elektrischen Leitung nicht erfolgt.

Das Steckverbindersteckergehäuse ist mit seinem Kühlmediumraum sowohl als Wärmetauscher als auch als Halter für die Kontaktanordnung und damit für wenigstens einen Steckverbinderkontakt ausgebildet. Durch die integrative Ausgestaltung des Steckverbindersteckergehäuse als Wärmetauscher und Halter kann auf einen separaten Wärmetauscher, der zusätzlich in das Gehäuse zu montieren ist und seine dann nur mittelbar am Steckverbinderkontakt anliegende Gehäusewandung aufweist, sodass eine verringerte thermische Anbindung vorliegt, verzichtet werden.

Die vorzugsweise als Anschlussnippel ausgebildete Anschlussstelle führt das Kühlmedium zwischen der Kühlmediumführung der elektrischen Leitung und dem Kühlmediumraum des Wärmetauschers derart, dass der wenigstens eine Steckverbinderkontakt der Kontaktanordnung direkt und unmittelbar von Kühlmedium umströmt ist. Auf diese Weise wird eine direkte Kühlwirkung erreicht. Gleichzeitig findet eine Wärmeübertragung von Kühlmedium zum als Wärmetauscher ausgebildeten Abschnitt des Steckverbindersteckergehäuses statt, sodass parallel eine mittelbare Kühlwirkung erfolgt. Mit der relativen radialen Positionierung der Anschlussstelle und der Halterung (und damit auch der Anschlagstelle) zueinander wird deren Versatz beeinflusst und damit auch das Strömungsverhalten des Kühlmediums, sodass dessen Kühlwirkung einstellbar ist.

Durch die funktionale Trennung von Anschlagstelle und Anschlussstelle wird die Funktion des wenigstens einen Steckverbinderkontaktes auf die lösbare Übertragung elektrischer Energie beschränkt, sodass konstruktive Ausgestaltungen zur Kühlmediumführung wie beispielsweise Durchbrüche, Kühlmediumraum oder Löcher nicht erforderlich sind. Dies hat zur Folge, dass der Steckverbinderkontakt einfach und kostengünstig konstruiert sein kann. Gleichzeitig kann die Festlegung des elektrischen Leiters an dem Steckverbinderkontakt innerhalb der Anschlagstelle in einfacher und damit kostengünstiger Weise erfolgen.

In besonders vorteilhafter Weise sieht die Erfindung vor, dass wenigstens zwei Anschlussstellen beabstandet zueinander an dem Kühlmediumraum angebracht sind. Dadurch kann eine zirkulare Kühlmediumführung ausgebildet werden, bei der über eine erste Anschlussstelle das Kühlmedium in den Kühlmediumraum zugeführt wird und das Kühlmedium den Kühlmediumraum in Richtung der zweiten Anschlussstelle durchströmt. Über die zweite Anschlussstelle strömt das Kühlmedium aus dem Kühlmediumraum hinaus.

Die Erfindung unterstützt in besonders vorteilhafter Weise einen einfachen und kostengünstigen Aufbau des Steckverbindersteckergehäuses sowie dessen Herstellung durch die Doppelfunktionalität von Wärmetauscher und mechanischem Haltern der Kontaktanordnung.

Die Erfindung wird im Folgenden anhand exemplarischer Ausführungsbeispiele in Verbindung mit den Figuren näher erläutert. Dabei zeigen:
- Fig. 1: eine Teil-Schnittansicht des Steckverbindersteckers mit einem Steckverbinderkontakt;
- Fig. 2: die Schnitt-Seitenansicht des Steckverbindersteckers mit einer Kontaktanordnung in Form eines ersten Steckverbinderkontaktes und einem zweiten Steckverbinderkontakt;
- Fig. 3: die Schnitt-Seitenansicht des Ausführungsbeispiels des Steckverbindersteckers aus Fig. 2 mit einer Variante der Halterung der Steckverbinderkontakte;
- Fig. 4: die Schnitt-Seitenansicht eines weiteren Ausführungsbeispiels des Steckverbindersteckers mit jeweils einem Steckverbinderkontakt zugeordneten Kühlmedienraum und Wärmetauscher;
- Fig. 5: die Schnitt-Seitenansicht eines weiteren Ausführungsbeispiels des Steckverbindersteckers mit jeweils einem Steckverbinderkontakt zugeordneten Kühlmedienraum und Wärmetauscher:
- Fig. 6: die Schnitt-Seitenansicht eines weiteren Ausführungsbeispiels des Steckverbindersteckers mit jeweils einem Steckverbinderkontakt zugeordneten Kühlmedienraum und Wärmetauscher;
- Fig. 7: die Schnitt-Seitenansicht eines weiteren Ausführungsbeispiels des Steckverbindersteckers mit jeweils einem Steckverbinderkontakt zugeordneten Kühlmedienraum und Wärmetauscher in einer zur Fig. 6 modifizierten Form.

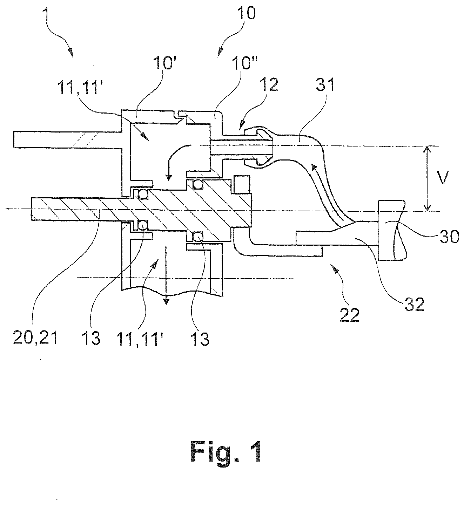

Figur 1 zeigt eine Teil-Schnittansicht des Steckverbindersteckers 1 mit einem Steckverbinderkontakt 21. Der Steckverbinderstecker 1 mit dem mehrfunktionalen Steckverbindersteckergehäuse 10 ist eine Kombination aus Kontaktträger und Wärmetauscher. Das Steckverbindersteckergehäuse 10 kann einteilig ausgebildet sein. Vorzugsweise ist das Steckverbindersteckergehäuse 10 mehrteilig, beispielsweise zweiteilig mit einer axialen Gehäusetrennung gestaltet, um einen einfachen Werkzeugaufbau, beispielsweise eines Spritzgusswerkzeuges, zu unterstützen. Durch eine Teilung des Gehäuses lässt sich somit ein Spritzgussverfahren besonders wirtschaftlich zur Herstellung des Steckverbindersteckergehäuses 10 nutzen.

Bei einem zweiteiligen Steckverbindersteckergehäuseaufbau kann, wie in dem Ausführungsbeispiel in Figur 1 dargestellt, ein endseitiger Stirnbereich des Steckverbindersteckergehäuses 10 als steckerseitiges Gehäuseteil 10` ausgebildet sein, ein zweites Gehäuseelement ist endseitig gegenüberliegend als leitungsseitiges Gehäuseteil 10" konzipiert. Im Innern des Steckverbindersteckergehäuses 10 befinden sich der wenigstens eine Kontaktträger sowie wenigstens ein Kühlmediumraum 11, der funktional als Wärmetauscher 11' konstruiert ist. Die beiden Gehäuseteile 10', 10" werden an deren Trennungsverlauf lösbar (beispielsweise durch Verschraubung, Verrastung) oder unlösbar (beispielsweise durch Ultraschallschweißen, Verklebung) gefügt. Liegt der Trennungsverlauf wenigstens bereichsweise angrenzend zum Kühlmediumraum 11, wird das Fügen des Trennungsbereiches mediendicht ausgeführt, beispielsweise durch eine Dichtung oder Dichtpaste.

Das steckseitige Gehäuseteil 10' umfasst neben wenigstens einer Halterung 13 auch die zu einem Steckverbindergegenstecker kompatible Ausbildung eines Steckgesichtes, einer Kodierung und gegebenenfalls einer Primär- und/oder Sekundärverriegelung.

Die Funktion des Kontaktträgers erfüllt das Steckverbindersteckergehäuse 10 durch Öffnungen, welche es ermöglichen, dass ein Steckverbinderkontakt 21 axial einschiebbar ist. Festgelegt wird der eingeschobene Steckverbinderkontakt 21 durch wenigstens eine Halterung 13, welche unterschiedlich konstruiert und je nach Gestaltungssituation des Kühlmediumraumes 11 ausgebildet ist. Im in Figur 1 gezeigten Ausführungsbeispiel ist der Kühlmediumraum 11 des Wärmetauschers 11' offen gegenüber dem Steckverbinderkontakt 21 der Kontaktanordnung 20 ausgeführt mit dem besonderen Vorteil, dass das Kühlmedium den Steckverbinderkontakt 21 abschnittsweise direkt umspülen kann und so eine besonders wirksame Kühlung durch intensiven Wärmeübergang erfolgt.

In der Ausführungsvariante der Figur 1 ist das Kühlmedium mit elektrisch nichtleitender, das heißt elektrisch isolierender Eigenschaft ausgestattet und die Halterung 13 wirkt abdichtend, da ein Abschnitt des Steckverbindersteckers 1 einen Teil der Wandung des Kühlmediumraumes 11 und damit des Wärmetauschers 11' darstellt. Zur Realisierung der hier erforderlichen Abdichtungsfunktion ist die Halterung 13 als O-Ring verwirklicht, die mechanische Fixierung wird durch dessen Klemmwirkung erreicht.

Da die Halterung 13 eine Doppelzentrierungssituation darstellt, ist die Verwendung von zwei O-Ringen, das heißt jeweils einem O-Ring auf Seiten des steckseitigen Gehäuseteils 10' und einem O-Ring auf Seiten des leitungsseitigen Gehäuseteils 10" besonders vorteilhaft, weil auf diese Weise axiale Mittenversatztoleranzen gut ausgleichbar sind.

Alternativ oder additiv zu der O-Ring-Anordnung kann die Dichtfunktion der Halterung 13 auch durch eine geeignete Passung herbeigeführt werden. Die mechanische Fixierung durch die Halterung 13 kann ergänzt sein durch einen mechanischen Anschlag, beispielsweise in Form einer Blende, welche ein Verschieben des Steckverbinderkontaktes 21 in Axialrichtung und/oder dessen Verdrehen um die Mittenachse verhindert.

Vor der Anschlagstelle 22 des elektrischen Leiters 32 an den Steckverbinderkontakt 21 ist der elektrische Leiter 32 aus der elektrischen Leitung 30 herausgeführt, sodass die Längserstreckung des elektrischen Leiters 32 zu der mittigen Kühlmediumführung 31 innerhalb des elektrischen Leiters 32 nicht mehr achszentrisch verläuft. Die Kühlmediumführung 31 ist mit einem Versatz V, beabstandet zu der Anschlagstelle 22 am Steckverbinderkontakt 21 an einer Anschlussstelle 12 des Steckverbindersteckergehäuses 10, 10" angeschlossen, sodass Kühlmedium zwischen der Kühlmediumführung 31 und dem Kühlmediumraum 11 des Wärmetauschers 11' strömen kann.

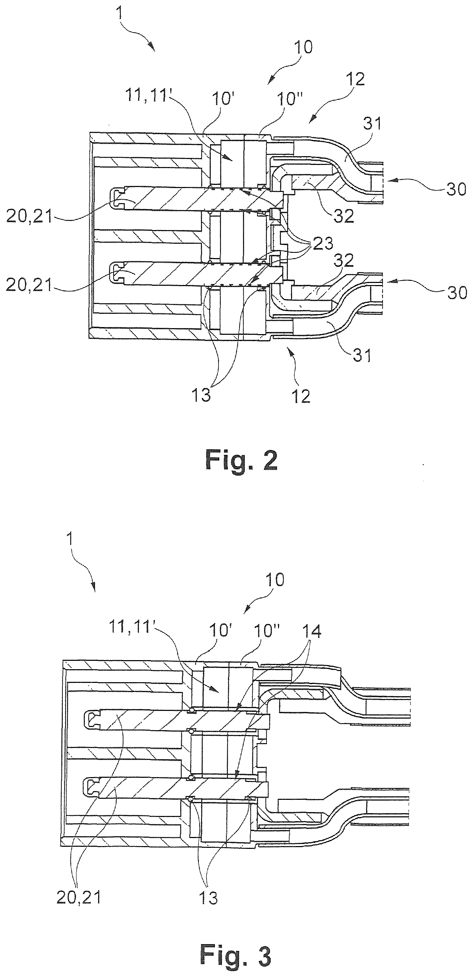

Figur 2 umfasst die Schnitt-Seitenansicht des Steckverbindersteckers 1 mit einer Kontaktanordnung 20 in Form eines ersten Steckverbinderkontaktes 21 und eines zweiten Steckverbinderkontaktes 21.

Das in Figur 2 gezeigte Ausführungsbeispiel weist eine Beschichtung 23 der Abschnitte der Steckverbinderkontakte 21 auf, die sich innerhalb des Kühlmediumraumes 11 des Wärmetauschers 11' längserstrecken. Diese Beschichtung 23 ist elektrisch isolierend, beispielsweise gebildet durch eine Kunststoffumspritzung oder eines Kunststoff-Schrumpfschlauches. Auch Keramiken oder Kompositwerkstoffe eignen sich als Ausgangsmaterial für die Beschichtung 23.

Infolge der elektrisch isolierenden Beschichtung 23 ist es möglich, Kühlmedien zu verwenden, die elektrisch leitend sind. Derartige Kühlmedien sind kostengünstig und können je nach Material hohe Kühlleistungen bewirken, dadurch, dass deren Wärmeleitfähigkeit und Wärmespeichereigenschaften oft über denen isolierend wirkender Kühlmedien liegen. Beispiele für elektrisch leitende Kühlmedien sind Wasser, glykolbasierte Flüssigkeiten oder Öl.

Wichtig ist, dass die Beschichtung 23 über den jeweils gesamten Abschnitt des Steckverbinderkontaktes 21 vollständig angebracht ist und sich in axialer Längsrichtung über die abdichtende Halterung 13 hinaus erstreckt, um den Kontakt des elektrisch leitenden Kühlmediums mit den elektrisch leitenden Oberflächen des Steckverbinderkontaktes 21 auszuschließen.

Das Kühlmedium 31 wird zirkulierend geführt, das heißt es strömt über eine erste Kühlmediumführung 31 und Anschlussstelle 12 in den Kühlmediumraum 11 des Wärmetauschers 11', durchströmt den Kühlmediumraum 11 und umspült dabei die Steckverbinderkontakte 21 der Kontaktanordnung 20, wird dann innerhalb des Kühlmediumraumes 11 geleitet in Richtung einer zweiten Anschlussstelle 12 und strömt über eine zweite Kühlmediumführung 31 ab.

Die zirkulare Kühlmediumführung 31 ist besonders kühlungswirksam, da das Kühlmedium mit großem Temperaturgefälle in Bezug auf die zu kühlenden Komponenten innerhalb eines variabel steuerbaren oder kontinuierlichen Kühlmediumvolumenstrom herangeführt werden kann und nach dem Wärmetauschprozess an den Wandungen des Wärmetauschers 11' und direktem Umspülen der Abschnitte der Steckverbinderkontakte 21 abgeführt wird.

Figur 3 illustriert die Schnitt-Seitenansicht des Ausführungsbeispiels des Steckverbindersteckers 1 aus Figur 2 mit einer Variante der Halterung 13 der Steckverbinderkontakte 21. Um die Verwendung elektrisch leitender Kühlmedien zu ermöglichen, ist alternativ zu der in Figur 2 gezeigten Halterung 13 in Form von O-Ringen hier das steckerseitige Gehäuseteil 10' und das leitungsseitige Gehäuseteil 10" des Steckverbindersteckergehäuses 10 jeweils im Bereich der Halterung 13 und damit der Aufnahme der Steckverbinderkontakte 21 in dem Steckverbindersteckergehäuse 10 im Kühlmediumraum 11 hülsenförmig ausgebildet.

Die mechanische Festlegung und mediendichte Ausbildung erfolgt durch jeweils eine zylindrische Bohrung in Aufnahmehülsen in beiden Gehäuseteilen 10', 10" mit Untermaß zu dem jeweils zylindrischen Abschnitt des zu halternden Steckverbinderkontaktes 21, sodass diese in die Bohrungen eingepresst werden.

Um die Mediendichtheit im Bereich der als Hülsen gestalteten Halterung 13 durch die Einpressbohrungen sicherzustellen, sind die Fügestellen 14 im stirnseitigen Bereich der Hülsen der Gehäuseteile 10', 10" dichtend ausgeführt, beispielsweise durch Verkleben, Verwendung von Dichtungen oder elastisch aushärtenden Dichtpasten.

Die Ausgestaltung der Halterung 13 als Hülsen mit Einpressbohrung unterstützt nicht den direkten Kontakt zwischen Steckverbinderkontakt 21 und Kühlmedium, fördert jedoch den intensiven Wärmeübergang durch die vollflächigen zylindrischen Anlageflächen zwischen Einpressbohrung und Steckverbinderkontakt 21, sodass eine besonders gute thermische Anbindung gewährleistet ist.

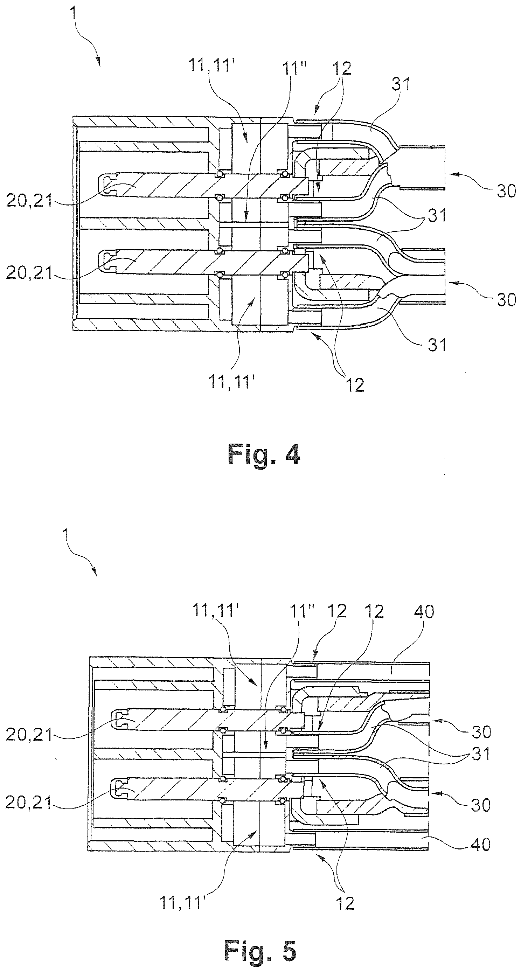

Figur 4 zeigt die Schnitt-Seitenansicht eines weiteren Ausführungsbeispiels des Steckverbindersteckers 1 mit jeweils einem Steckverbinderkontakt 21 zugeordneten Kühlmedienraum 11 und Wärmetauscher 11' innerhalb des einen Steckverbindersteckergehäuses 10 und der Gehäuseteile 10', 10". Die Zuordnung erfolgt durch eine strömungstechnische Trennung, Teilung mittels einer Trennwand 11" und die Realisierung einer jeweils zugeordneten zirkularen Kühlmediumführung 31 innerhalb der zugeordneten Kühlmedienräume 11.

Aus der elektrischen Leitung 30, aufweisend zwei Kühlmedienführungen 31, werden diese herausgeführt und mit jeweils einer Anschlussstelle 12 des jeweils zugeordneten Kühlmediumraumes 11 verbunden, sodass Kühlmedium strömen kann.

Das Kühlmedium wird für jeden jeweils einen Steckverbinderkontakt 21 zugeordneten Kühlmediumraum 11 des Wärmetauschers 11' zirkulierend geführt, das heißt es strömt über eine erste Kühlmediumführung 31 und Anschlussstelle 12 Kühlmedium in den Kühlmediumraum 11 des Wärmetauschers 11', durchströmt den Kühlmediumraum 11 und umspült dabei den einen zugeordneten Steckverbinderkontakt 21, wird dann innerhalb des zugordneten Kühlmediumraum 11 geleitet in Richtung einer zweiten Anschlussstelle 12 des Kühlmediumraumes 11 und strömt über eine zweite Kühlmediumführung 31 ab.

Die konzeptionelle Erfindungsvariante der zugeordneten Kühlmedienräume 11 der Wärmetauscher 11' zu jeweils einem Steckverbinderkontakt 21 der Kontaktanordnung 20 bietet den Vorteil, dass die Kühlungsleistung des einzelnen Steckverbinderkontaktes 21 durch Steuerung des Kühlmediumvolumenstromes und/oder der der Kühlmediumsorte gezielt beeinflusst und angepasst werden kann. Auch ermöglicht das Konzept der zugeordneten Wärmetauscher 11' zu jeweils einem Steckverbinderkontakt 21 eine modulare Bauweise, bei der eine Mehrzahl von Steckverbinderkontakten 21 zu Kontaktanordnungen 20 zusammenfassbar sind und die Kühlungsleistung je nach individueller Anforderung jedes einzelnen Steckverbinderkontaktes 21 einstellbar ist.

Figur 5 umfasst die Schnitt-Seitenansicht eines weiteren Ausführungsbeispiels des Steckverbindersteckers 1 mit jeweils einem Steckverbinderkontakt 21 zugeordneten Kühlmedienraum 11 und Wärmetauscher 11' mit einer gegenüber dem Ausführungsbeispiel der Figur 4 geänderten Ausgestaltung des Zu- und Ablaufes des Kühlmediums. Anstelle der Verwendung einer elektrischen Leitung 30 mit einem elektrischen Leiter 32 und zwei Kühlmediumführungen 31 jeweils für einen Steckverbinderkontakt 21 wird hier die zirkulare Kühlmediumführung 31 innerhalb eines Kühlmediumraumes 11 durch eine Kombination aus Kühlmediumführung 31 und Kühlmediumleitung 40 verwirklicht.

Die Kühlmediumführung 31 der elektrischen Leitung 30 ist nach der Herausführung des elektrischen Leiters 32 zur Anschlagstelle 22 des jeweiligen Steckverbinderkontaktes 21 mit Versatz V zu einer Anschlussstelle 12 des dem Steckverbinderkontaktes 21 zugeordneten Kühlmediumraumes 11 des Wärmetauschers 11' verlegt. An der weiteren Anschlussstelle 12 des Kühlmediumraumes 11 ist eine Kühlmediumleitung 40 festgelegt.

Die Strömung des Kühlmediums erfolgt in analoger Weise, wie in dem Ausführungsbeispiel der Figur 4 beschrieben. Besonders vorteilhaft ist es, wenn die Kühlmediumleitung 40 als Kühlmediumzulauf hinein in den Kühlmediumraum 11 genutzt wird und die Kühlmediumführung 31 als Ablauf. Dadurch kann Kühlmedium mit niedriger Temperatur zugeführt und so die Kühlleistung verbessert werden. Wird im Vergleich dazu das Kühlmedium über die Kühlmediumführung 31 der elektrischen Leitung 30 herangebracht, kann das Kühlmedium infolge der elektrischen Verlustleistung des elektrischen Leiters 32 bereits ein höheres Temperaturniveau aufweisen.

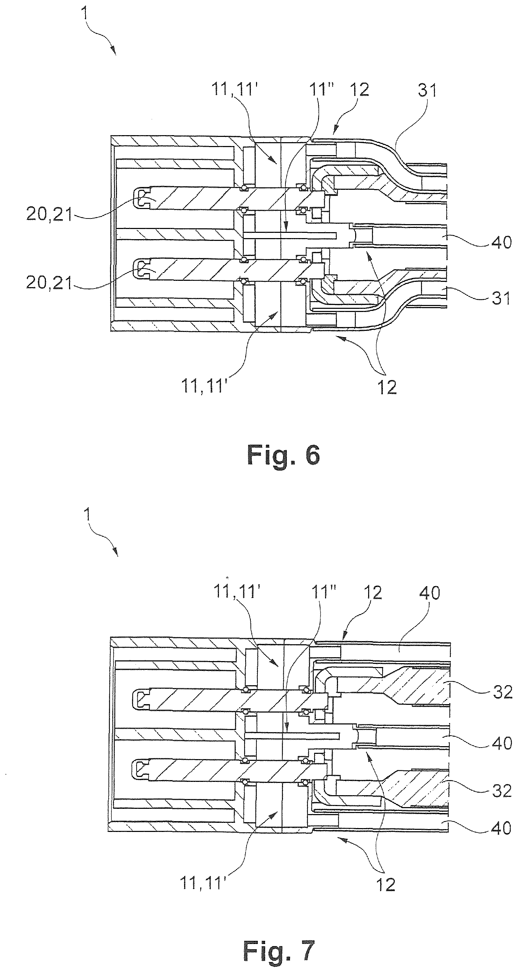

Figur 6 illustriert die Schnitt-Seitenansicht eines weiteren Ausführungsbeispiels des Steckverbindersteckers 1 mit jeweils einem Steckverbinderkontakt 21 zugeordneten Kühlmedienraum 11 und Wärmetauscher 11' mit einer für beide Kühlmediumräume 11 konstruierten Anschlussstelle 12. Exemplarisch gezeigt ist eine an diese gemeinsame Anschlussstelle 12 festgelegte Kühlmediumführung 31, welche vorzugsweise als Kühlmediumablauf fungiert.

Die Trennwand 11" zwischen beiden Kühlmediumräumen 11 ist mit der gemeinsamen Anschlussstelle 12 derart ausgebildet, dass Kühlmediumströmung zwischen beiden Kühlmediumräumen 11 und der gemeinsamen Anschlussstelle 12 erfolgt und die Kühlmediumströmung zwischen den Kühlmediumräumen 11 wenigstens reduziert ist. Auf diese Weise wird in jedem der Kühlmediumräume 11 eine zirkulare Kühlmediumströmung unter Verwendung einer gemeinsamen Anschlussstelle 12 realisiert.

Figur 7 zeigt die Schnitt-Seitenansicht eines weiteren Ausführungsbeispiels des Steckverbindersteckers 1 mit jeweils einem Steckverbinderkontakt 21 zugeordneten Kühlmedienraum 11 und Wärmetauscher 11' in einer basierend auf dem in Figur 6 dargestellten Ausführungsbeispiel modifizierten Form. Die zirkulare Kühlmediumführung 31 des Ausführungsbeispiels von Figur 7 wird durch die Verwendung von Kühlmediumleitungen 40 und ohne die Kühlmediumführungen 31 der elektrischer Leiter 32 bewerkstelligt.

Die Strömung des Kühlmediums erfolgt in analoger Weise wie in dem Ausführungsbeispiel der Figur 6 beschrieben. Unabhängig davon, ob der Kühlmediumzulauf über die gemeinsame Anschlussstelle 12 und die daran festgelegte Kühlmediumführung 31 erfolgt oder über die jeweils zweite Anschlussstelle 12 mit daran festgelegter Kühlmediumführung 31, kann die Kühlmediumzulauftemperatur unabhängig von Erwärmungsvorgängen niedrig oder einstellbar realisiert werden.

Bei allen gezeigten Ausführungsbeispielen kann erfindungsgemäß vorgesehen sein, dass innerhalb des Kühlmediumraumes 11 Rippen und/oder Leitbleche angeordnet sind. Je nach Ausgestaltung und Anordnung ist dadurch die Lenkung des Kühlmediumstromes innerhalb des Kühlmediumraumes 11 möglich oder es kann eine turbulente Strömung zur gesteigerten Durchmischung des Kühlmediums erreicht werden. Dadurch kann die Kühlleistung nochmals verbessert werden. Die Rippen und/oder Leitbleche können mit versteifender Wirkung konstruiert sein, sodass ähnlich einer Sandwichbauweise bei gleicher Steifigkeit die Wandstärken der Gehäuseteile 10', 10" reduziert oder die Steifigkeit bei gleicher Wandstärke gesteigert ist.

Über die Anordnung und Anzahl der Anschlussstellen 12 kann beeinflusst werden, ob die Kühlmediumzuströmung hinein in den Kühlmediumraum 11 und den Kühlmediumablauf hinaus aus dem Kühlmediumraum 11 durch Kühlmediumführungen 31 oder durch Kühlmediumleitungen 40 erfolgt und die Kühlmediumzulauftemperatur gezielt beeinflusst beziehungsweise abgesenkt wird.

### Bezugszeichenliste

- 1: Steckverbinderstecker

- 10: Steckverbindersteckergehäuse
- 10`: steckseitiges Gehäuseteil
- 10": leitungsseitiges Gehäuseteil
- 11: Kühlmediumraum
- 11': Wärmetauscher
- 11": Trennwand
- 12: Anschlussstelle
- 13: Halterung
- 14: Fügestelle

- 20: Kontaktanordnung
- 21: Steckverbinderkontakt
- 22: Anschlagstelle
- 23: Beschichtung

- 30: elektrische Leitung
- 31: Kühlmediumführung
- 32: elektrischer Leiter

- 40: Kühlmediumleitung

- V: Versatz

## Patentansprüche

1. Steckverbinderstecker (1) zur lösbaren Übertragung elektrischer Leistung, aufweisend eine Kontaktanordnung (20) mit wenigstens einem Steckverbinderkontakt (21), wobei der Steckverbinderstecker (1) ein Steckverbindersteckergehäuse (10) aufweist, in dem die Kontaktanordnung (20) eingehaust ist, **dadurch gekennzeichnet, dass** das Steckverbindersteckergehäuse (10) den wenigstens einen Steckverbinderkontakt (21) festlegt und wenigstens einen Kühlmediumraum (11) für wenigstens einen Wärmetauscher (11`) bildet, wobei der wenigstens eine Kühlmediumraum (11) wenigstens zwei zueinander beabstandete Anschlussstellen (12) für die Zu- und Abströmung von Kühlmedium aufweist, sodass eine zirkulare Kühlmediumführung ausgebildet ist.

2. Steckverbinderstecker (1) gemäß Anspruch 1, **dadurch gekennzeichnet, dass** das Steckverbindersteckergehäuse (10) durch ein steckerseitiges Gehäuseteil (10`) und ein leitungsseitiges Gehäuseteil (10") gebildet ist.

3. Steckverbinderstecker (1) gemäß Anspruch 1, **dadurch gekennzeichnet, dass** sich der wenigstens eine Steckverbinderkontakt (21) bereichsweise in den Kühlmediumraum (11) des Wärmetauschers (11') erstreckt.

4. Steckverbinderstecker (1) gemäß Anspruch 1, **dadurch gekennzeichnet, dass** der wenigstens eine Steckverbinderkontakt (21) durch eine Halterung (13) innerhalb des Steckverbindersteckergehäuses (10) festgelegt ist.

5. Steckverbinderstecker (1) gemäß Anspruch 4, **dadurch gekennzeichnet, dass** die Halterung (13) durch zwei konzentrisch zueinander angeordnete O-Ringe mit axialem Abstand gebildet ist.

6. Steckverbinderstecker (1) gemäß Anspruch 4, **dadurch gekennzeichnet, dass** die Halterung (13) hülsenförmig zur Aufnahme eines Steckverbinderkontaktes (21) und Festlegung durch eine Presspassung ausgebildet ist.

7. Steckverbinderstecker (1) gemäß Anspruch 4, **dadurch gekennzeichnet, dass** zwischen jeweils einer Anschlussstelle (12) und der Halterung (13) ein radialer Versatz (V) ist.

8. Steckverbinderstecker (1) gemäß Anspruch 1, **dadurch gekennzeichnet, dass** an wenigstens einer Anschlussstelle (12) eine Kühlmediumleitung (40) festgelegt ist, sodass zwischen Kühlmediumleitung (40) und Kühlmediumraum (11) Kühlmedium strömen kann.

9. Steckverbinderstecker (1) gemäß Anspruch 1, **dadurch gekennzeichnet, dass** an wenigstens einer Anschlussstelle (12) eine Kühlmediumführung (31) festgelegt ist, sodass zwischen Kühlmediumführung (31) und Kühlmediumraum (11) ein Kühlmedium strömen kann.

10. Steckverbinderstecker (1) gemäß Anspruch 1, **dadurch gekennzeichnet, dass** der wenigstens eine Steckverbinderkontakt (21) eine Anschlagstelle (22) aufweist, an die ein elektrischer Leiter (32) einer elektrischen Leitung (30) angeschlagen ist.

11. Steckverbinderstecker (1) gemäß Anspruch 10, **dadurch gekennzeichnet, dass** die elektrische Leitung (30) wenigstens eine Kühlmediumführung (31) aufweist.

12. Steckverbinderstecker (1) gemäß Anspruch 1, **dadurch gekennzeichnet, dass** die Kontaktanordnung (20) einen zweiten Steckverbinderkontakt (21) aufweist.

13. Steckverbinderstecker (1) gemäß Anspruch 12, **dadurch gekennzeichnet, dass** jedem Steckverbinderkontakt (21) innerhalb des Steckverbindersteckergehäuses (10) ein Kühlmediumraum (11) zugeordnet ist.

14. Steckverbinderstecker (1) gemäß Anspruch 13, **dadurch gekennzeichnet, dass** in jedem zugeordneten Kühlmediumraum (11) über wenigstens zwei Anschlussstellen (12) Kühlmedium strömt, sodass in jedem zugeordneten Kühlmediumraum (11) eine zirkulare Kühlmediumführung (31) ausgebildet ist.
